# EUROPEAN PATENT SPECIFICATION

(11) **EP 0 522 731 B1**
(45) Date of publication and mention of the grant of the patent: **17.01.1996**
(21) Application number: 92305640.2
(22) Date of filing: 19.06.1992
(51) Int. Cl.: C03B 7/09

(54) **Spout bowl for molten glass feeder**
Speiserbecken für geschmolzenes Glas
Cuvette d'avant-corps pour verre fondu

(30) Priority: 28.06.1991 US 723163
(43) Date of publication of application: 13.01.1993
(73) Proprietor: Emhart Glass Machinery Investments Inc., Wilmington, Delaware 19801 (US)
(72) Inventor: Buettiker, Paul, Bloomfield, Connecticut 06002 (US)
(74) Representative: Randall, John Walter

(56) References cited:
- US-A- 1 869 921
- US-A- 1 870 210
- US-A- 4 554 000
- US-A- 4 717 412

## Description

The present invention relates to feeders for molten glass and more particularly to spout bowls for receiving molten glass and supplying tightly controlled amounts to the molds of a container forming machine located downstream and below the spout.

In a conventional feeder such as is shown in U.S. Patent No. 4,554,000 molten glass is supplied to a spout bowl which has a circular hole at the bottom. A cylindrical tube overlies the spout bowl and a selected clearance can be established between the bottom of the tube and the surface of the spout bowl around the opening to control glass flow from the spout bowl. To achieve uniform tube wear and to improve the uniformity of the temperature of the molten glass and its flow, either the tube is rotated or paddles are rotated within the spout bowl (see U.S. Patent No. 4,717,412).

US-A-1 870 210 shows a feeder having a spout bowl for receiving molten glass from a forehearth having a horizontally extending flow channel extending on either side of a centre line, the spout bowl having a substantially vertical arcuate inside wall surface. The feeder is provided with a rotatable vertical feeder tube, and the spout bowl comprises a discharge opening, surrounded by a rim, which is in alignment with the axis of the feeder tube. The spout bowl comprises an inclined inlet wall, and the arcuate inside wall surface is formed as an involute curve about the axis of the feeder tube, which axis is displaced laterally from the centre line of the forehearth. Rotation of the feeder tube is required to obtain the feeding of the molten glass around the spout bowl.

It is accordingly an object of the present invention to achieve uniform temperature and flow of the molten glass from the orifice ring at the bottom of the spout bowl without rotating the tube or internal paddles whereby the driving mechanism for the tube or paddles can be eliminated.

The present invention provides a spout bowl for receiving molten glass from a forehearth having a horizontally extending flow channel extending on either side of a centreline and for use with a non-rotating vertical tube of a feeder mechanism, said spout bowl comprising
a substantially vertical arcuate inside wall surface extending from either side of an inlet opening and a substantially horizontal bottom with a cylindrical discharge opening therein
the axis of said cylindrical discharge opening located to be in alignment with the axis of the feeder tube and substantially in line with the forehearth centerline when connected with the forehearth, the inner substantially vertical arcuate inside surface of said spout bowl to define with the vertical tube of the feeder mechanism, substantially from the top of said spout bowl to the bottom thereof, a spiral molten glass receiving volume, with the horizontal distance between the vertical tube of the feeder mechanism and the inside surface of said spout bowl in any horizontal plane decreasing substantially uniformly from a start orientation for about 270° about said discharge opening to one of said sides of said opening into said spout bowl for receiving molten glass from the forehearth,
said one side located to be substantially at the centerline of the forehearth and
the other end of said vertical surface defining the other side of the inlet opening into said spout bowl.

The present invention also provides an assembly for supplying molten glass to a glassware forming machine comprising
a forehearth including a horizontally extending flow channel extending on either side of a centreline,
a feeder including a non-rotating vertical tube and
a spout bowl having an inlet opening for receiving molten glass from said forehearth, said spout bowl including,
a substantially vertical arcuate inside wall surface extending from either side of said inlet opening and a substantially horizontal bottom with a cylindrical discharge opening therein defining a vertical central axis,
the axis of said discharge opening is aligned with the axis of said vertical tube and substantially in line with said forehearth centerline,
said vertical tube located spaced from and above the bottom of said spout bowl,
the inner substantially vertical arcuate inside wall surface defining with said vertical tube, substantially from the top to the bottom of said spout bowl, a spiral molten glass receiving volume with the horizontal distance between said tube and the vertical inside wall surface of said spout bowl, in substantially any horizontal plane, decreasing substantially uniformly from a start orientation for about 270° about said tube axis to one of said inlet opening sides,
said one side being substantially at the centerline of said forehearth, and
the other end of said vertical arcuate inside wall surface defining the other side of the inlet opening into said spout bowl, and
said forehearth further including a transition section adjacent said spout bowl for narrowing said molten glass flow channel to the width of said spout bowl inlet opening.

Other objects and advantages of the present invention will become apparent from the following description of a presently preferred embodiment incorporating the principles of the invention

### Referring to the drawings:

Figure 1 is a side cross sectional view of a prior art spout bowl assembly;
Figure 2 is a view of the prior art spout bowl assembly shown in Figure 1 taken along the lines 2-2 of Figure 1;
Figure 3 is a view of the prior art spout bowl assembly shown in Figure 2 taken along the lines 3-3 of Figure 1;
Figure 4 is a view similar to that of Figure 1 of a spout bowl assembly made in accordance with the teachings of the present invention receiving molten glass from a forehearth;
Figure 5 is a view of the spout bowl assembly illustrated in Figure 4 taken along the lines 5-5 thereof;
Figure 6 is a view of the spout bowl assembly illustrated in Figure 5 taken along the lines 6-6 thereof; and
Figure 7 is a schematic representation of the distribution of velocity vectors at the mid plane of the tube gap.

A conventional spout bowl assembly 10 is made up of a refractory bowl 12 which rests on a cast iron bracket 14 supported on a cast iron housing 16. Between the refractory bowl and the housing are layers of loose insulation 18 and microtherm 20. The housing 16 is secured to a support plate 22 and a roof structure including mullite blocks 24 and firebricks 26 closes the top except for an opening 28 through which a refractory tube 30 extends. The refractory tube has the same inner diameter as the inner diameter of the discharge hole 32 in the refractory bowl 12 and the rate of flow from the bowl through the throat defined between the bottom of the tube and the bowl can be controlled by adjusting the separation between the bowl and the bottom 35 of the tube. Discharged molten glass passes through an orifice plate 34.

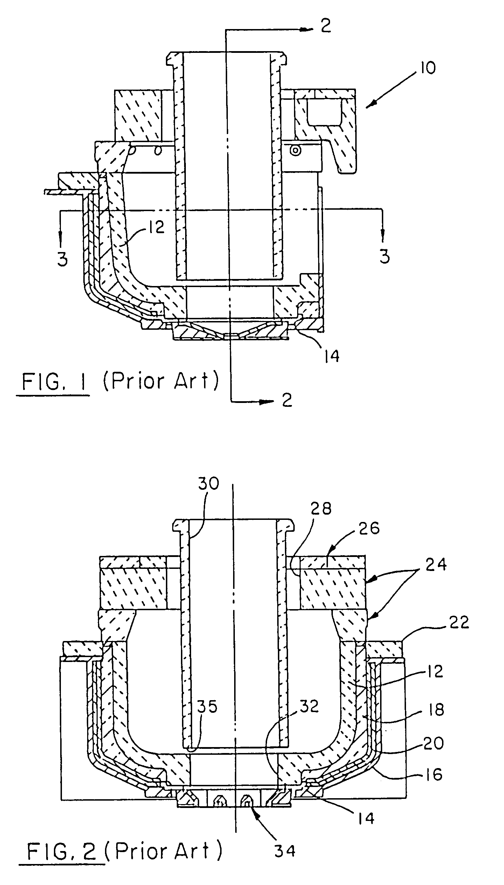

As can be seen from Figures 1 to 3 the front portion of the bowl remote from the forehearth (not shown) is substantially cylindrical and the back portion joining this cylindrical portion to the forehearth 90° clockwise or counterclockwise from the forehearth centreline has parallel sides. Molten glass flows into the bowl flowing both clockwise and counterclockwise. The tube rotates either direction to distribute heat more uniformly and to achieve uniform tube wear at the bottom surface 35.

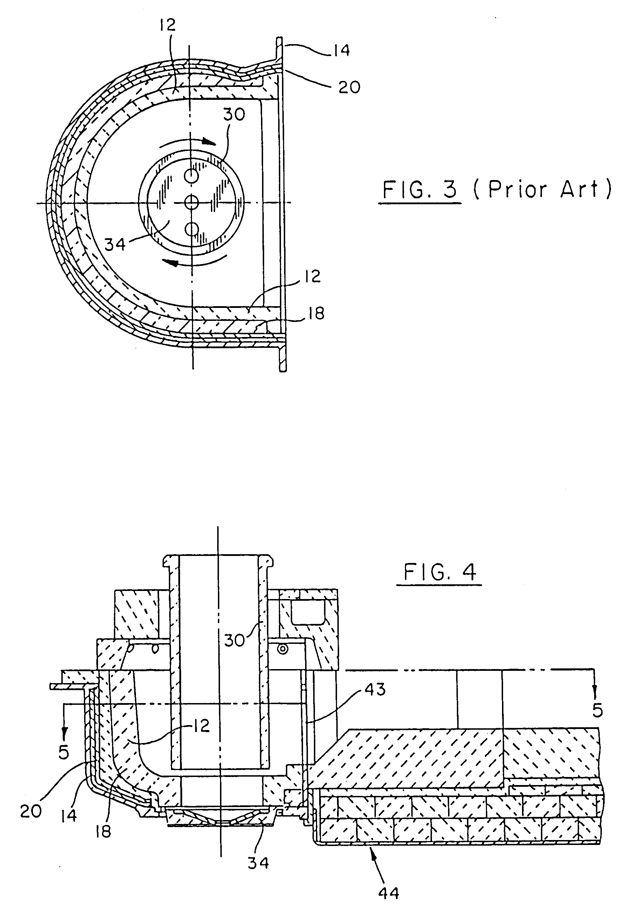

The inventive spout bowl assembly (Figures 4-7) has a stationary vertical tube and a spiral spout bowl design. The spout bowl comprises a substantially vertical arcuate inside wall surface 41 extending from either side of an inlet opening 43 which extends from a location 51 substantially at the centerline 40 of the forehearth and spout bowl to one side 42 of the spout bowl. The forehearth includes a transitioning section 44 which reduces the width of the flow channel 46 from its original width to the width of the spout bowl inlet 43 and the transitioning section is tapered at the centreline so that molten glass will be directed clockwise around the stationary tube 30.

The spout bowl comprises a substantially horizontal bottom 45 with a cylindrical discharge opening 47 therein. The axis of the opening 47 is located in alignment with the axis of the feeder tube 30 and substantially in line with the centre line 40 of the forehearth.

The inside surface 41 of the spout bowl defines with the vertical tube 30 of the feeder mechanism substantially from the top of the spout bowl to the bottom 45, a spiral molten glass receiving volume, with the horizontal distance in any horizontal plane between the inside surface 41 and the vertical tube 30 of the feeder mechanism (or the axis of the opening 47) decreasing substantially uniformly from a start orientation 49 for about 270° about the discharge opening 47 to one side 51 of the inlet opening 43 which is located to be substantially at the centre line 40 of the forehearth, the other end of the vertical surface 41 defining the other side 53 of the inlet opening 43.

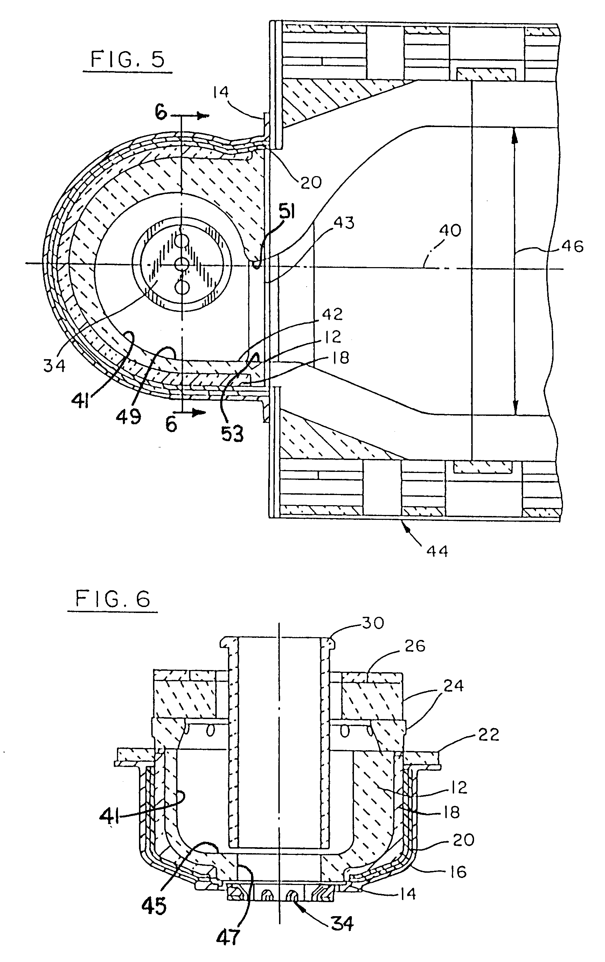

As can be seen from Figure 5, the initial portion 42 of the outside wall of the spout bowl is straight, parallel to and between the forehearth centerline 40 and the adjacent forehearth side wall. Beginning at the location

| A (Degrees) | R (Feet) |
|---|---|
| 0.0 | 1.0000 |
| 22.5 | 0.9685 |
| 45.0 | 0.9375 |
| 67.5 | 0.9060 |
| 90.0 | 0.8750 |
| 112.0 | 0.8435 |
| 135.0 | 0.8125 |
| 157.5 | 0.7810 |
| 180.0 | 0.7500 |
| 202.5 | 0.7185 |
| 225.0 | 0.6875 |
| 257.5 | 0.6560 |
| 270.0 | 0.6250 |

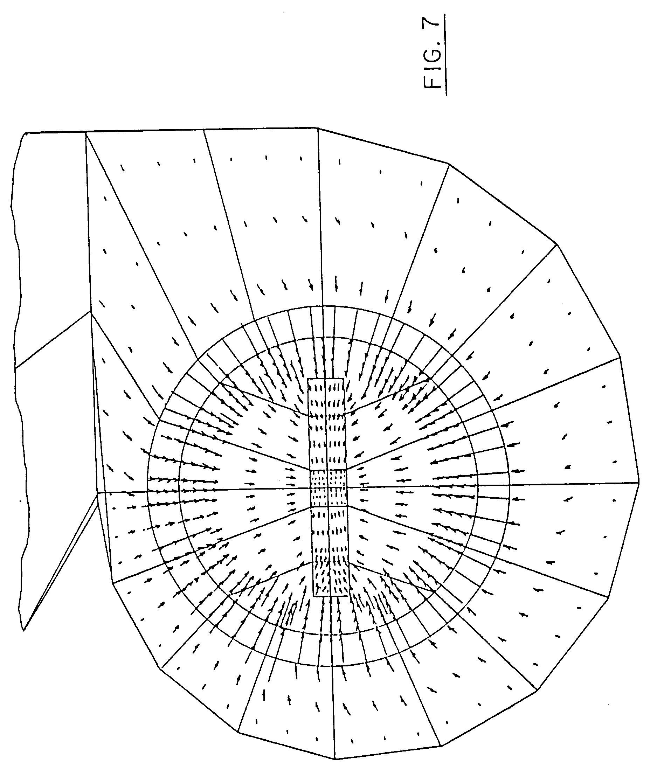

90° clockwise from the forehearth centerline, the vertical surface of the bowl is changed. The radius of the inner vertical surface of the spout bowl substantially uniformly decreases in the clockwise direction. This design provides a positively guided working flow pattern in the region between the spout tube and the throat. In this region as can be seen from Figure 7, as a result of this new design, the flow vectors are pointed in the radial direction and are of uniform length.

## Claims

1. A spout bowl for receiving molten glass from a forehearth having a horizontally extending flow channel extending on either side of a centreline and for use with a non-rotating vertical tube of a feeder mechanism, said spout bowl comprising
a substantially vertical arcuate inside wall surface (41) extending from either side of an inlet opening (43) and a substantially horizontal bottom (45) with a cylindrical discharge opening (47) therein
the axis of said cylindrical discharge opening (47) located to be in alignment with the axis of the feeder tube (30) and substantially in line with the forehearth centerline (40) when connected with the forehearth,
the inner substantially vertical arcuate inside surface (41) of said spout bowl to define with the vertical tube (30) of the feeder mechanism, substantially from the top of said spout bowl to the bottom (45) thereof, a spiral molten glass receiving volume, with the horizontal distance between the vertical tube of the feeder mechanism and the inside surface of said spout bowl in any horizontal plane decreasing substantially uniformly from a start orientation (49) for about 270° about said discharge opening (47) to one (51) of said sides of said opening into said spout bowl for receiving molten glass from the forehearth,
said one side (51) located to be substantially at the centerline (40) of the forehearth and
the other end of said vertical surface defining the other side (53) of the inlet opening (43) into said spout bowl.

2. A spout bowl according to claim 1, wherein the change of horizontal distance between the axis of the discharge opening (47) and the inside surface of said spout bowl decreases linearly as a function of the angle from said start orientation.

3. A spout bowl according to claim 1, wherein the portion of said vertical arcuate inside wall surface (41) between said other side (53) of said inlet opening and said start orientation on (49) extends parallel to the forehearth centerline (40) between the forehearth centerline and the adjacent forehearth side.

4. An assembly for supplying molten glass to a glassware forming machine comprising
a forehearth including a horizontally extending flow channel extending on either side of a centerline (40),
a feeder including a non-rotating vertical tube (30) and
a spout bowl having an inlet opening (43) for receiving molten glass from said forehearth, said spout bowl including,
a substantially vertical arcuate inside wall surface (41) extending from either side of said inlet opening (43) and a substantially horizontal bottom (45) with a cylindrical discharge opening (47) therein defining a vertical central axis,
the axis of said discharge opening (47) is aligned with the axis of said vertical tube (30) and substantially in line with said forehearth centerline (40),
said vertical tube (30) located spaced from and above the bottom (45) of said spout bowl,
the inner substantially vertical arcuate inside wall surface (41) defining with said vertical tube (30), substantially from the top to the bottom of said spout bowl, a spiral molten glass receiving volume with the horizontal distance between said tube and the vertical inside wall surface of said spout bowl, in substantially any horizontal plane, decreasing substantially uniformly from a start orientation for about 270° about said tube axis to one (51) of said inlet opening sides,
said one side (51) being substantially at the centerline of said forehearth, and
the other end of said vertical arcuate inside wall surface defining the other side (53) of the inlet opening (43) into said spout bowl, and
said forehearth further including a transition section adjacent said spout bowl for narrowing said molten glass flow channel to the width of said spout bowl inlet opening.

5. An assembly according to claim 4, wherein said vertical spout bowl surface (41) from the other side (53) of said inlet opening (43) to said start location (49) extends parallel to said centerline between the forehearth centerline (40) and the adjacent forehearth side.

## Patentansprüche

1. Speiserbecken zur Aufnahme der Glasschmelze aus einem Vorherd mit einem waagerecht beiderseits einer Mittellinie verlaufenden Strömungskanal und zur Verwendung mit einem nicht umlaufenden vertikalen Rohr einer Speisermechanik, wobei das Speiserbecken
eine im wesentlichen vertikale gekrümmte Innenwandfläche (41), die von beiden Seiten einer Zulauföffnung (43) her abverläuft, sowie einen im wesentlichen waagerechten Boden (45) aufweist, der eine zylindrische Ablauföffnung (47) enthält,
die Achse der zylindrischen Ablauföffnung mit der Achse des Speiserrohrs (30) ausgerichtet ist und, wenn mit dem Vorherd verbunden, im wesentlichen auf einer Linie mit der Mittellinie des Vorherds liegt,
die im wesentlichen vertikale gekrümmte Innenwandfläche (41) des Speiserbeckens mit dem vertikalen Rohr (30) der Speisermechanik zusammen im wesentlichen vom Oberrand bis zum Boden (45) des Speiserbeckens ein spiralförmiges, Glasschmelze aufnehmendes Volumen bildet, in dem der waagerechte Abstand zwischen dem vertikalen Rohr der Speisermechanik und der Innenwandfläche des Speiserbeckens in einer beliebigen Waagerechten Ebene von einem Anfangspunkt (49) ausgehend etwa 270° um die Ausgabeöffnung herum zu einer (51) der Seiten der Zulauföffnung zum Speiserbecken zur Aufnahme von Glasschmelze aus dem Vorherd hin im wesentlichen gleichmäßig abnimmt,
die eine Seite (51) im wesentlichen an der Mittelinie (40) des Vorherds liegt und
das andere Ende der vertikalen Fläche die andere Seite (53) der Zulauföffnung (43) zum Speiserbecken bildet.

2. Speiserbecken nach Anspruch 1, bei dem der waagerechte Abstand zwischen der Achse der Ablauföffnung (47) und der Innenwandfläche des Speiserbeckens vom Anfangspunkt ausgehend als lineare Funktion des Winkels abnimmt.

3. Speiserbecken nach Anspruch 1, bei dem der zwischen der anderen Seite (53) der Zulauföffnung und der Anfangsorientierung (49) liegende Teil der vertikalen gekrümmten Innenwandfläche parallel zur und zwischen der Mittellinie (40) und der angrenzenden Seite des Vorherds verläuft.

4. Anordnung zur Zufuhr von Glasschmelze an eine Glasgutformmaschine mit
einem Vorherd mit einem waagerecht und beiderseits einer Mittellinie (40) verlaufenden Strömungskanal,
einem Speiser mit einem nicht umlaufenden vertikalen Rohr (30) und
einem Speiserbecken mit einer Zulauföffnung (43) zur Aufnahme von Glasschmelze aus dem Vorherd, wobei das Speiserbecken
eine im wesentlichen vertikale gekrümmte Innenwandfläche (41), die auf beiden Seiten der Zulauföffnung (43) von dieser her abverläuft, sowie einen im wesentlichen waagerechten Boden (45) aufweist, der eine zylindrische Abgabeöffnung (47) enthält, die eine vertikale Mittelachse hat, wobei
die Achse der Ablauföffnung (47) mit der Achse des vertikalen Rohrs (30) ausgerichtet ist und im wesentlichen in einer Linie mit der Mittellinie (40) des Vorherds liegt,
das vertikale Rohr (30) beabstandet von und über dem Boden (45) des Speiserbeckens liegt,
die im wesentlichen vertikale gekrümmte Innenwandfläche (41) zusammen mit dem vertikalen Rohr (30) im wesentlichen vom Oberrand zum Boden des Speiserbeckens ein spiralförmiges, Glasschmelze aufnehmendes Volumen bildet, wobei der waagerechte Abstand zwischen dem Rohr und der vertikalen Innenwandfläche des Speiserbeckens in im wesentlichen jeder waagerechten Ebene von einem Anfangspunkt ausgehend etwa 270° um die Rohrachse herum bis zu einer (51) der Seiten der Zulauföffnung im wesentlichen gleichmäßig abnimmt,
die eine Seite (51) im wesentlichen an der Mittellinie des Vorherds liegt und
das andere Ende der vertikalen gekrümmten Innenwandfläche die andere Seite (53) der Zulauföffnung (43) zum Speiserbecken bildet, und
der Vorherd weiterhin einen am Speiserbecken befindlichen Übergangsbereich zum Verengen des Strömungskanals für die Glasschmelze auf die Breite der Zulauföffnung zum Speiserbecken aufweist.

5. Anordnung nach Anspruch 4, bei der die vertikale Speiserbeckenfläche (41) von der anderen Seite (53) der Zulauföffnung (43) zum Ausgangspunkt (49) parallel zur und zwischen der Mittellinie (40) und der angrenzenden Seite des Vorherds verläuft.

## Revendications

1. Cuvette pour recevoir du verre fondu d'un avant- creuset ayant un canal d'écoulement s'étendant horizontalement de part et d'autre d'une ligne centrale et destinée a être utilisée avec un tube vertical non rotatif d'un mécanisme distributeur, ladite cuvette comprenant
une surface de paroi intérieure incurvée sensiblement verticale (41) s'étendant de chaque côté d'une ouverture d'entrée (43) et un fond sensiblement horizontal (45) dans lequel est pratiquée une ouverture de déchargement cylindrique (47),
l'axe de ladite ouverture de déchargement cylindrique (47) étant situé de façon a être aligné avec l'axe du tube de distributeur (30) et sensiblement aligné avec la ligne centrale (40) de l' avant-creuset lorsqu'il est raccordé a l'avant-creuset.
la surface intérieure incurvée sensiblement verticale (41) de ladite cuvette devant définir avec le tube vertical (30) du mécanisme distributeur, sensiblement du haut de ladite cuvette à son fond (45), un volume de réception de verre fondu de forme spirale, la distance horizontale entre le tube vertical du mécanisme distributeur et la surface intérieure de ladite cuvette dans un plan horizontal quelconque décroissant sensiblement uniformément a partir d'une orientation de départ (49) et sur un angle d'environ 270° par rapport à ladite ouverture de déchargement (47) jusqu'a l'un (51) desdits côtés de ladite ouverture pratiquée dans ladite cuvette, pour recevoir du verre fondu de l'avant-creuset,
ledit côté (51) étant situé de façon a être sensiblement sur la ligne centrale (40) de l'avant-creuset, et
l'autre extrémité de ladite surface verticale définissant l'autre côté (53) de l'ouverture d'entrée (43) pratiquée dans ladite cuvette.

2. Cuvette selon la revendication 1, dans laquelle la variation de distance horizontale entre l'axe de l'ouverture de déchargement (47) et la surface intérieure de ladite cuvette décroît linéairement en fonction de l'angle formé par rapport à ladite orientation de départ.

3. Cuvette selon la revendication 1, dans laquelle la partie de ladite surface de paroi intérieure incurvée verticale (41) située entre ledit autre côté (53) de ladite ouverture d'entrée et ladite orientation de départ (49), s'étend parallèlement à l'axe central (40) de l'avant-creuset l'axe central de l'avant-creuset et le côté adjacent de l'avant-creuset.

4. Ensemble pour alimenter en verre fondu une machine de fabrication d'articles de verre, comprenant :
un avant-creuset comportant un canal d'écoulement s'étendant horizontalement de part et d'autre d'une ligne centrale (40),
un distributeur comportant un tube vertical non rotatif (30), et
une cuvette ayant une ouverture d'entrée (43) pour recevoir du verre fondu dudit avant-creuset, ladite cuvette comportant :
une surface de paroi intérieure incurvée sensiblement verticale (41) s'étendant de part et d'autre de ladite ouverture d'entrée (43) et un fond sensiblement horizontal (45) dans lequel est pratiquée une ouverture de déchargement cylindrique (47) définissant un axe central vertical,
l'axe de ladite ouverture de déchargement (47) étant aligné avec l'axe dudit tube vertical (30) et étant sensiblement aligné avec ladite ligne centrale (40) de l'avant-creuset,
ledit tube vertical (30) étant situé de façon espacée et au-dessus du fond (45) de ladite cuvette,
la surface intérieure (41) de la paroi intérieure incurvée sensiblement verticale définissant avec ledit tube vertical (30), sensiblement du haut au fond de ladite cuvette, un volume de réception de verre fondu de forme spirale, la distance horizontale entre ledit tube et la surface de paroi intérieure verticale de ladite cuvette, dans un plan horizontal sensiblement quelconque, décroissant sensiblement uniformément à partir d'une orientation de départ et sur un angle d'environ 270° par rapport audit axe du tube jusqu'à l'un (51) desdits côtés de l'ouverture d'entrée,
ledit côté (51) étant sensiblement sur la ligne centrale dudit avant-creuset, et
l'autre extrémité de ladite surface de paroi intérieure incurvée verticale définissant l'autre côté (53) de l'ouverture d'entrée (43) dans ladite cuvette, et
ledit avant-creuset comportant une section de transition adjacente à ladite cuvette pour réduire ledit canal d'écoulement de verre fondu à la largeur de ladite ouverture d'entrée de la cuvette.

5. Ensemble selon la revendication 4, dans lequel ladite surface de cuvette verticale (41) partant de l'autre côté (53) de ladite ouverture d'entrée (43) jusqu'audit emplacement de départ (49), s'étend parallèlement à la ligne centrale entre la ligne centrale (40) de l'avant-creuset et le côté adjacent de l'avant-creuset.
